(19) **Europäisches Patentamt**

**European Patent Office**

**Office européen des brevets**

(11) **EP 0 867 710 B1**

(12) **EUROPÄISCHE PATENTSCHRIFT**

(45) Veröffentlichungstag und Bekanntmachung des Hinweises auf die Patenterteilung:
**17.09.2003  Patentblatt 2003/38**

(51) Int Cl.$^7$: **G01N 21/47**, G01N 15/02

(21) Anmeldenummer: **98105460.4**

(22) Anmeldetag: **26.03.1998**

(54) **Faserdetektor für ein Messgerät zur Bestimmung der Lichtstreuung**

Fibre optic detector for a measuring device for the determination of light scattering

Détecteur à fibres optiques pour un appareil de mesure pour déterminer la dispersion de lumière

(84) Benannte Vertragsstaaten:
**AT CH DE FR GB LI**

(30) Priorität: **28.03.1997  DE 19713196**

(43) Veröffentlichungstag der Anmeldung:
**30.09.1998  Patentblatt 1998/40**

(73) Patentinhaber: **ALV-Laser Vertriebsgesellschaft mbH**
**63225 Langen (DE)**

(72) Erfinder: **Peters, Rainer**
**63225 Langen (DE)**

(74) Vertreter: **Meyer-Dulheuer, Karl-Hermann, Dr. Patentanwalt,**
**Metzlerstrasse 27**
**60594 Frankfurt am Main (DE)**

(56) Entgegenhaltungen:
**EP-A- 0 196 168**　　　**DE-U- 29 705 625**
**US-A- 5 155 549**

- **BRENCI M ET AL: "QUASI-MONODISPERSE PARTICULATE CHARACTERIZATION WITH OPTICAL FIBERSAND A THREE-WAVELENGTH SCATTERING TECHNIQUE" SENSORS AND ACTUATORS B, Bd. B29, Nr. 1/03, 1.Oktober 1995, Seiten 115-118, XP000541428**
- **MACFADYEN A J ET AL: "FIBRE-OPTIC SYSTEMS FOR DYNAMIC LIGHT SCATTERING-A REVIEW" OPTICS AND LASER TECHNOLOGY, Bd. 22, Nr. 3, 1.Juni 1990, Seiten 175-187, XP000137235**

**Beschreibung**

Gegenstand der Erfindung ist ein Faserdetektor für ein Meßgerät zur Bestimmung der statischen und/oder der dynamischen Lichtstreuung.

Detektoren zur Bestimmung der statischen und/oder der dynamischen Lichtstreuung, in denen optische Fasern eingesetzt werden, finden wegen der Einfachheit ihres Aufbaus und ihrer Ausrichtung vielfache Anwendung. Verglichen mit den klassischen Lochblendendetektoren ergeben Faserdetektoren wegen ihrer Eigenschaft, nur wenige transversale Moden aus dem gesamten Streulicht einer Probe auszuwählen, eine höhere Lichtintensität mit einer besseren Kohärenz des aufgefangenen Lichtes. Obwohl eine vollständige Theorie der Lichtausbreitung in einer optischen Faser für mehrmodige optische Fasern sehr kompliziert ist, reicht für praktische Zwecke die Annahme aus, daß alle Moden sich in einer optischen Faser verlustfrei und orthogonal zueinander ausbreiten. Läßt man Nebeneffekte außer acht, dann kann die Lichtleitfaser als ein Bündel von einzelnen, voneinander getrennten, einmodigen Fasern aufgefaßt werden, die scheinbar voneinander durch den für die jeweils verwendete Wellenlänge typischen Modenfeld-Durchmesser getrennt sind. Solch eine Faser soll als eine ideale optische Faser bezeichnet werden.

In einem typischen Versuch zur Messung der dynamischer Lichtstreuung wird die zeitliche Änderung der Intensität des von dem gelösten Partikeln gestreuten Lichtes gemessen, die in einem definierten Streuvektor q auftritt. Die zeitlichen Änderungen der Intensität des Streulichtes entstehen durch die räumliche Bewegung der gelösten Partikel zueinander. Das von jedem Partikel gestreute Licht hat am Ort seiner Detektion eine definierte Phase, die von seiner Position und von der Summe aller Streubeiträge der Partikel in der Lösung abhängt. Da es sich bei den Ortswechseln der Partikel um die thermisch induzierte Brownsche Bewegung handelt, sind die Positionswechsel völlig zufällig ebenso wie die Phasenwechsel und das sich daraus ergebende optische Feld am Beobachtungspunkt. Während diese Wechsel der Amplitude des optischen Feldes und der Lichtstärke am Beobachtungspunkt völlig zufällig sind, solange die Bewegung der Partikel zufällig ist, gibt die Spektralanalyse der zeitabhängigen Änderungen der optischen Eigenschaften Informationen beispielsweise über die durchschnittlichen Diffusionskoeffizienten der Partikel. Eine genauere Einführung in die Theorie der dynamischen Lichtstreuung findet sich bei W. Brown, "Dynamic Light Scattering - The method and some applications", Clarendon Press, Oxford, 1993.

Entscheidend für Untersuchungen des dynamischen Streulichtes ist, daß ein Detektor verwendet wird, der nicht zu viel zusätzliches Licht mit zu vielen unabhängigen Streuvektoren in die zu untersuchende Probe einstrahlt, weil dann der fluktuierende Anteil des Streulichtes im Verhältnis zur Gesamtintensität des Streulichtes einen fast zu vernachlässigenden geringen Anteil ausmachen würde. Die theoretische Grenze wird erreicht mit einem Verhältnis von fluktuierendem Signal und Hintergrundsignal, auch Interzept genannt, von 1 : 1. In diesem Fall sind also der fluktuierende Anteil und der konstante Anteil des Signals gleich, eine Bedingung die erfüllt ist, wenn gerade eine einzelne transversale Mode des Streulichtes ausgewählt wird. Der Grund hierfür ist darin zu sehen, daß bei Beleuchtung der Probe mit einmodigem Licht der kleinste definierbare Streuvektorbereich von der durch die Gauss'sche Divergenz bestimmten natürlichen Streuung von einem einmodigen oder einem durch die Beugung begrenzten Lichtstrahl bestimmt wird. Jede weitere Reduzierung des ausgewählten Streuvektorbereiches erfordert eine zusätzliche Begrenzung der Beugung, zum Beispiel mittels Lochblenden, welche einen Verlust von Lichtstärke zur Folge hat, weil sie das Verhältnis des Anteils des fluktuierenden Lichtsignals zum konstanten Lichtsignal nicht weiter erhöht, sondern stattdessen Lichtstärke von den Rändern des kleinsten natürlichen Streuvektorbereichs entfernt, wodurch Licht verlorengeht, ohne daß dadurch die Messung des dynamischen Streulichtes verbessert wird.

Die unterste Grenze des Verhältnisses vom fluktuierenden Signalanteil zum konstanten Signalanteil würde eine völlig inkohärente oder vielmodige Detektion sein. Während die Gesamtintensität des Streulichtes mit jeder zusätzlich ausgewählten Mode entsprechend wächst, wird der fluktuierende Anteil des Signals schnell bis auf nahe 0 herausgemittelt, wobei das sich ergebende Produkt aus Interzept und Lichtintensität ein Parameter ist, der für ideale optische Lichtfasern eine Konstante ist.

Es muß jedoch betont werden, daß für eine inkohärente Detektion die Vorteile des Faserdetektors gegenüber dem klassischen Lochscheibendetektor sehr gering werden, weil Beugungseffekte bei einer relativ großen Blendenöffnung nur noch eine untergeordnete Bedeutung haben. Beim Faser- und Lochblendennachweis des Streulichtes stehen die Mode und die Intensität des Lichtes untereinander in folgenden Beziehungen:

$$\text{Interzept}_{Faser} = \frac{1}{N}, \text{Intensität}_{Faser} \cong N$$

$$\text{Interzept}_{Lochblende} = \frac{1}{1+N}, \text{Intensität}_{Lochblende} \cong N$$

wobei N die Anzahl der ausgewählten Moden bedeutet [J. Ricka, Dynamic Light Scattering with Single Mode and Multimode Receivers, Applied Optics 32, 2860-2875 (1993)]. Für eine Multimode-Detektion mit N = 100 sind die Unterschiede nur 1%, während es bei einem Interzept von 0,8 notwendig ist, bei einer Lochblendendetektion etwa 75% des Streulichtes abzuschirmen, verglichen mit einem einmodigen Faserdetektor, und bei einem Interzept von 0,9 läßt der Lochblendendetektor also nur noch 10% des Lichts durchtreten.

Für die Untersuchung der dynamischen Lichtstreuung ist jedoch das Verhältnis von Signal zum Rauschen bei einem Signal mit einem bestimmten Interzept und einer bestimmten Gesamtintensität von größter Bedeutung. Obwohl eine genaue Analyse des Signal/Rauschverhältnisses kompliziert ist, haben bereits früher durchgeführte Versuche gezeigt [K. Schätzel and R. Peters, Noise on Multi-Tau Photon Correlation Data, SPIE Proceedings Volume 1430 (1991), pages 109-115], daß das Optimum des Interzepts bei etwa 0,8 liegt, was 1,25 Moden entspricht. Allerdings gibt es eine derartige Einzelfaser nicht, weil die Zahl der Moden entweder 1 oder 3 oder 6 usw. beträgt. Deshalb kann eine Mode von 1,25 nur durch Mischung von Moden unterschiedlicher Lichtstärke oder durch den Einsatz von Modenfiltern, die an die oben genannte Bedingungen angepaßt sind, erhalten werden. Beim Einsatz einer klassischen Lochblende mit einem derartigen Interzept würde die gesamte durchtretende Lichtstärke verglichen mit einem einmodigen Faserdetektor auf nur 25% reduziert.

Bei Untersuchungen zur Messung des statischen Streulichtes wird die gesamte Intensität des Streulichtes in einem bestimmten Streuvektor q gemessen. Als Ergebnis wird die Winkelabhängigkeit der Lichtintensität des gestreuten Lichtes festgestellt. Da die Genauigkeit dieser Messungen hauptsächlich von den tatsächlich gemessenen Intensitäten abhängt, sollte zum Nachweis mehr als eine Mode des Lichtes eingesetzt werden, um die Gesamtlichtintensität zu erhöhen. Einige Spezialgeräte nutzen zum Nachweis des statischen Streulichtes sogar sehr inkohärentes Licht mit bis zu einigen hundert Moden. Tatsächlich ist die Höchstzahl der einsetzbaren Moden zum Nachweis der statischen Lichtstreuung nur durch die höchste, noch hinnehmbare Winkelungenauigkeit begrenzt, die sichergestellt sein soll.

Bei den meisten Untersuchungen zur dynamischen und/oder statischen Lichtstreuung kommt es darauf an, beide Messungen gleichzeitig anzuwenden. Zusätzlich sollten die nach beiden Meßmethoden erhaltenen Daten von der gleichen Probelösung gewonnen werden, was voraussetzt, daß für beide Messungen der gleiche Detektor verwendet wird. Obwohl das technisch möglich ist, sind die Anforderungen, entweder ein hohes Interzept bei der dynamischen Lichtstreuung oder eine hohe Gesamtintensität bei der statischen Lichtstreuung zu erhalten, so gegensätzlich, daß für beide Messungen nicht gleichzeitig optimale Bedingungen bestehen können. Stattdessen muß nach einem Kompromiß gesucht werden. Bisher wurden deshalb zur gleichzeitigen Messung von statischer und dynamischer Lichtstreuung Faserdetektoren mit dreimodigen Fasern eingesetzt, die eine dreifach höhere Lichtintensität verglichen mit einer einmodigen Lichtfaser gewährleisteten, jedoch einen Interzept von nur 0,333, verglichen mit dem optimalen Wert von 0,8 ergaben.

Der angestrebte optimale Interzept von 0,8 kann also nicht mit einer einzelnen optischen Faser erreicht werden, sondern nur mit einer dreimodigen Lichtfaser, die zusammen mit zusätzlichen, die Beugung begrenzenden Vorrichtungen eingesetzt wird, wie zum Beispiel Lochscheiben. Dabei geht jedoch ein erhebli cher Anteil des Lichtes verloren.

Es stellte sich deshalb die Aufgabe, einen Faserdetektor zu entwickeln, mit dem ohne Lichtverlust der optimale Interzept erreicht werden kann. Entscheidend für die Lösung dieser Aufgabe ist die Erkenntnis, daß eine dreimodige Lichtfaser als eine aus drei einzelnen einmodigen Fasern zusammengesetzte optische Faser aufgefaßt werden kann. Das bedeutet, daß drei einmodige Fasern, die Licht von drei verschiedenen Streuvektoren aufnehmen und dann zu einer einzigen Faser zusammengefaßt werden, alle Merkmale einer dreimodigen Lichtfaser aufweisen. Wenn nun diese drei einmodigen Lichtfasern nicht Licht gleicher Lichtstärken miteinander vermischen, sondern Lichtstärken, die im Verhältnis von beispielsweise 0,125 : 1 : 0,125 stehen, dann erhält man ein Licht mit einer Intensität von 1,25 Moden.

Die technische Lösung zur Herstellung eines Faserdetektors mit beliebigen Lichtintensitäten zwischen 1 und 3 (bei Verwendung einer dreimodigen optischen Faser) oder beliebigen Lichtintensitäten zwischen 1 und 6 (bei Verwendung einer sechsmodigen optischen Faser) wird erfindungsgemäß erzielt, wenn ein an sich bekanntes Gerät zur Spaltung eines einheitlichen Lichstrahles in mehrere Lichtstrahlen verbunden wird mit einer neuen Vorrichtung, die es erlaubt, einzelne Moden aus einem mehrmodigen Lichtstrahl auszuwählen und durch die Mischung unterschiedlicher Moden einen Lichtstrahl mit der gewünschten, ganz speziellen optischen Intensität herzustellen.

Dieses Ziel läßt sich durch einen erfindungsgemäßen Faserdetektor für ein Meßgerät zur Bestimmung der dynamischen Lichtstreuung erreichen, bei dem eine mehrmodige optische Faser 4 zunächst mit einer Vorrichtung 9 zur Aufspaltung des Lichtes in zwei Lichtstrahlen gleicher oder unterschiedlicher Intensität verbunden ist und jeder der Lichtstrahlen dann von einer mehrmodigen, optischen Faser 5 aufgenommen wird, wobei eine dieser mehrmodigen optischen Fasern über einen Faserverbinder 7 mit einer einmodigen optischen Faser 6 verknüpft ist und beide optischen Fasern dann unter Mischung des Lichtes mit einem Einzelphotonendetektor 8 verbunden sind.

Zur Bestimmung der statischen und der dynamischen Lichtstreuung dient dagegen ein Faserdetektor, der einen optischen Umschalter (10) enthält, welcher das Licht wahlweise über eine mehrmodige optische Faser (5) oder über eine mehrmodige optische Faser, die mittels eines Fasersverbinders mit einer einmodigen optischen Faser (6) verknüpft ist, einem Einzelphotonendetektor (8) zuleitet.

Fig. 1    zeigt einen erfindungsgemäßen Faserdetektor für ein Interzept = 0,8 mit einer Vorrichtung (9) zur Aufspaltung des Lichts in zwei Teilstrahlen.

Fig. 2    zeigt einen erfindungsgemäßen Faserdetektor mit einem optischen Umschalter (10), durch den das Licht wahlweise über eine mehrmodige optische Faser (5) oder über eine mit einer einmodigen Faser verknüpfte mehrmodige Faser geleitet werden kann.

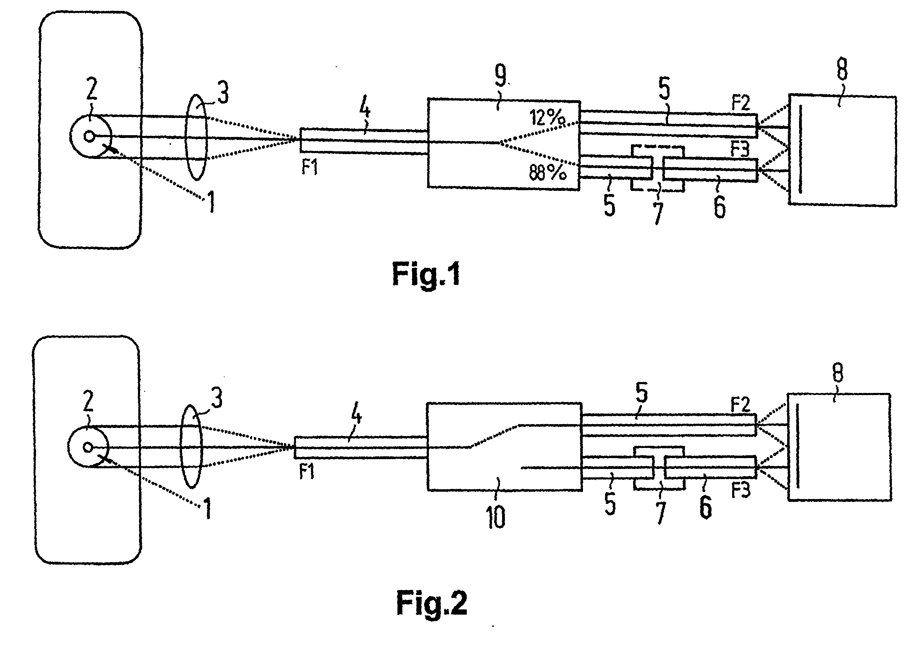

In Fig. 1 beleuchtet der Laserstrahl 1 die Probe 2, dessen Streulicht durch eine Fokussiereinrichtung 3 in eine dreimodige, optische Faser (F1) 4 eingeleitet wird.

Von dort wird das Licht in die Vorrichtung zur Aufspaltung des Lichtes 9 geleitet, die den einheitlichen Lichtstrahl in zwei Lichtstrahlen mit 12% bzw. 88% der ursprünglichen Lichtstärke zerlegt. Der Lichtstrahl mit der Lichtstärke von 12% verläßt die Vorrichtung zur Aufspaltung des Lichtes über eine dreimodige optische Faser (F2) 5, die mit dem Einzelphotonendetektor 8, üblicherweise einem Photomultiplier oder einer Photodiode, verbunden ist. Auf dem anderen Lichtweg wird der Lichtstrahl mittels des hochpräzisen Faserverbinders 7 mit der optischen Faser (F3) 6 verknüpft, die nur eine einzige Mode aufweist, welche ebenfalls mit dem Einzelphotonendetektor 8 verbunden ist. Durch die Reduktion der drei Moden auf dem letztgenannten Lichtweg bis auf eine Mode wird die Lichtintensität von 88% auf etwa 29% reduziert, die im Photonendetektor mit der Lichtintensität von 12% des anderen Lichtstrahls zu einer Gesamtintensität von 41% und einem Interzept von etwa 0,8 gemischt wird.

Die für den erfindungsgemäßen Laserdetektor erforderliche dreimodige, sechsmodige oder zehnmodige optische Faser ist eine im Handel erhältliche optische Lichtfaser, die nach Kerndurchmesser, numerischer Apertur und Wellenlänge des angewendeten Lichtes so ausgewählt wird, daß sich in ihr drei Moden ausbreiten können. Entsprechend kann auch eine optische Faser ausgewählt werden, die sechs oder zehn Lichtmoden leiten kann.

Die Verbindung einer dreimodigen Faser mit einer einmodigen optischen Faser zur Weiterleitung einer Mode ist nahezu verlustfrei, falls die numerischen Aperturen in beiden Fasern in etwa gleich sind. Bei einer fehlerhaften Faserverbindung können allerdings Verluste auftreten. Da sich jedoch die Lichtintensität längs der Achse des Faserkerns sich nach der Gauss'schen Verteilungskurve richtet, sind die Verluste fast immer gering.

Mit dem beschriebenen Faserdetektor kann jeder Mode-Wert zwischen 1 und 3 eingestellt werden.

Durch Variation des Spaltverhältnisses in der Vorrichtung zur Aufspaltung des Lichtes 9 werden bei Verwendung einer dreimodigen optischen Faser F1 die in Tabelle 1 für F3 und F2 gemessenen Werte des Gesamtinterzepts und der Gesamtlichintensität gemessen.

Tabelle 1

| F1 ist eine dreimodige Faser | | | |
|---|---|---|---|
| Spaltverhältnis für F3 (%) | Spaltverhältnis für F2 (%) | Gesamtinterzept | Gesamtlichtintensität (verglichen mit einer einmodigen Faser) |
| 99 | 1 | 0,980 | 1,02 |
| 95 | 5 | 0,909 | 1,10 |
| 90 | 10 | 0,833 | 1,20 |
| 85 | 15 | 0,769 | 1,30 |
| 80 | 20 | 0,714 | 1,40 |
| 70 | 30 | 0,625 | 1,60 |
| 60 | 40 | 0,556 | 1,80 |
| 50 | 50 | 0,500 | 2,00 |
| 40 | 60 | 0,455 | 2,20 |
| 30 | 70 | 0,417 | 2,40 |
| 20 | 80 | 0,385 | 2,60 |
| 10 | 90 | 0,357 | 2,80 |
| 5 | 95 | 0,345 | 2,90 |
| 1 | 99 | 0,336 | 2,98 |

Tabelle 2 zeigt die Meßergebnisse, wenn F1 eine sechsmodige Faser ist. Bei unterschiedlichen Spaltverhältnissen für F3 und F2 wurden die angegebenen Werte für den Gesamtinterzept und die Gesamtlichtintensität gemessen:

Tabelle 2

| F1 ist eine sechsmodige Faser | | | |
|---|---|---|---|
| Spaltverhältnis für F3 (%) | Spaltverhältnis für F2 (%) | Gesamtinterzept | Gesamtlichtintensität (verglichen mit einer einmodigen Faser) |
| 99 | 1 | 0,952 | 1,05 |
| 95 | 5 | 0,800 | 1,25 |
| 90 | 10 | 0,667 | 1,50 |
| 85 | 15 | 0,571 | 1,75 |
| 80 | 20 | 0,500 | 2,00 |
| 70 | 30 | 0,400 | 2,50 |
| 60 | 40 | 0,333 | 3,00 |
| 50 | 50 | 0,286 | 3,50 |
| 40 | 60 | 0,250 | 4,00 |
| 30 | 70 | 0,222 | 4,50 |
| 20 | 80 | 0,200 | 5,00 |
| 10 | 90 | 0,182 | 5,50 |
| 5 | 95 | 0,174 | 5,75 |
| 1 | 99 | 0,168 | 5,95 |

Selbstverständlich ist der Einsatz einer einmodigen optischen Faser für F1 im vorliegenden Zusammenhang nutzlos, weil damit keine Modenmischungen und damit keine Optimerung des Faserdetektors für Untersuchungen der dynamischen Lichtstreuung möglich sind.

Wenn eine Vorrichtung zum Aufspalten des Lichtes verwendet wird, die variable Spaltverhältnisse ermöglicht, zum Beispiel ein Flüssigkristallverzögerer mit einem Glan-Prisma-Polarisationswürfel, kann an Stelle von festgelegten Spaltverhältnissen die gesamte Bandbreite der Interzepte und der sich daraus ergebenden Gesamtintensitäten mit einem einzigen Aufbau bestimmt werden, ohne daß irgendwelche optischen Teile ausgewechselt werden müssen.

Alternativ kann erfindungsgemäß auch ein Faserdetektor eingesetzt werden, der an Stelle der Vorrichtung zur optischen Aufspaltung des Lichtes 9 einen optischen Umschalter 10 enthält, der das Licht wahlweise über eine mehrmodige optische Faser 5 oder über eine mehrmodige optische Faser 5, die mittels eines Faserverbinders 7 mit einer einmodigen optischen Faser 6 verknüpft ist und dann das Licht dem Einzelphotonendetektor 8 zuleitet. Mit einer derartigen Vorrichtung können praktisch gleichzeitig die statische und die dynamische Lichtstreuung gemessen werden, indem für eine Meßzeit t ein hohes Interzept verwendet wird, um die dynamische Lichtstreuung zu ermitteln und danach umgeschaltet wird, um bei hoher Lichtintensität die statische Lichtstreuung zu messen (Fig. 2). Falls eine sechsmodige optische Faser verwendet wird, ist die Gesamtintensität des statischen Streulichtes sechsmal größer als die Intensität der dynamischen Lichtstreuung. Das hat zur Folge, daß die Meßzeit bei gleicher Genauigkeit sechsmal kürzer ist und die Informationen über die statische Lichtstreuung immer erheblich über der Rauschgrenze liegen, die bei einem Einzelphotonendetektor durch den Anteil der Dunkelzählung (thermisches Rauschen) hervorgerufen wird.

**Bezugszeichenliste:**

1    Laserstrahl
2    Probe
3    Fokussiereinrichtung
4    mehrmodige optische Faser (F1)
5    mehrmodige optische Faser (F2)
6    einmodige optische Faser (F3)
7    Faserverbinder

8    Einzelphotonendetektor
9    Vorrichtung zum Aufspalten des Lichtes
10    optischer Umschalter

**Patentansprüche**

1.    Faserdetektor für ein Messgerät zur Bestimmung der dynamischen Lichtstreuung enthaltend eine mehrmodige optische Faser (4) und einen Photonendetektor (8), durch **gekennzeichnet**, dass die mehrmodige optische Faser (4) zunächst mit einer Vorrichtung (9) zur Aufspaltung des Lichtes in zwei Lichtstrahlen gleicher oder unterschiedlicher Intensität verbunden ist und jeder der Lichtstrahlen dann von einer mehrmodigen optischen Faser (5) aufgenommen wird, wobei eine dieser mehrmodigen optischen Fasern (5) über einen Faserverbinder (7) mit einer einmodigen optischen Faser (6) verknüpft ist und beide optischen Fasern dann unter Mischung des Lichtes mit einem Einzelphotonendetektor (8) verbunden sind.

2.    Faserdetektor für ein Messgerät zur Bestimmung der statischen und der dynamischen Lichtstreuung enthaltend eine mehrmodige optische Faser (4) und einen Photonendetektor (8), **dadurch gekennzeichnet, dass** die mehrmodige optische Faser (4) zunächst mit einem optischen Umschalter (10) verbunden ist, der das Licht wahlweise über eine mehrmodige optische Faser (5) oder über eine mehrmodige optische Faser (5) die mittels eines Faserverbinders (7) mit einer einmodigen optischen Faser (6) verknüpft ist, einem Einzelphotonendetektor (8) zuleitet.

**Claims**

1.    Fibre detector for a measuring instrument for determining dynamic light scattering, including a multimode optical fibre (4) and a photon detector (8), **characterized in that** the multimode optical fibre (4) is firstly connected to a device (9) for splitting the light into two light beams of equal or different intensity, and each of the light beams is then picked up by a multimode optical fibre (5), one of these multimode optical fibres (5) being linked to a monomode optical fibre (6) via a fibre joint (7), and both optical fibres then being connected to a single-photon detector (8) with mixing of the light.

2.    Fibre detector for a measuring instrument for determining static and dynamic light scattering, including a multimode optical fibre (4) and a photon detector (8), **characterized in that** the multimode optical fibre (4) is firstly connected to an optical changeover switch (10) which leads the light to a single-photon detector (8) optionally via a multimode optical fibre (5) or via a multimode optical fibre (5) which is linked to a single-mode optical fibre (6) by means of a fibre joint (7).

**Revendications**

1.    Détecteur à fibres optiques pour un appareil de mesure pour déterminer la dispersion dynamique de la lumière comprenant une fibre optique multimodale (4) et un détecteur de photons (8), **caractérisé en ce que** la fibre optique multimodale (4) est tout d'abord reliée à un dispositif (9) de fractionnement de la lumière en deux rayons de lumière d'intensités égales ou différentes et chacun des rayons de lumière est ensuite recueilli par une fibre optique multimodale (5), l'une de ces fibres optiques multimodales (5) étant ici combinée avec une fibre optique monomodale (6) par le biais d'un raccord à fibres (7) et les deux fibres optiques étant alors reliées à un détecteur de photons unique (8) en mélangeant la lumière.

2.    Détecteur à fibres optiques pour un appareil de mesure pour déterminer la dispersion statique et dynamique de la lumière comprenant une fibre optique multimodale (4) et un détecteur de photons (8), **caractérisé en ce que** la fibre optique multimodale (4) est tout d'abord reliée à un inverseur optique (10) qui achemine la lumière à un détecteur de photons unique (8) au choix, par le biais d'une fibre optique multimodale (5) ou par le biais d'une fibre optique multimodale (5) qui est combinée avec une fibre optique monomodale (6) à l'aide d'un raccord à fibres (7).

**Fig.1**

**Fig.2**

EP 0 867 710 B1